(19) Europäisches Patentamt / European Patent Office / Office européen des brevets

(11) **EP 2 844 871 B1**

(12) **FASCICULE DE BREVET EUROPEEN**

(45) Date de publication et mention
de la délivrance du brevet:
**23.01.2019 Bulletin 2019/04**

(21) Numéro de dépôt: **13719830.5**

(22) Date de dépôt: **29.04.2013**

(51) Int Cl.:
*F03G 7/06* (2006.01)     *H02N 1/08* (2006.01)
*H02N 10/00* (2006.01)     *H02K 7/18* (2006.01)
*H02N 2/18* (2006.01)

(86) Numéro de dépôt international:
**PCT/EP2013/058833**

(87) Numéro de publication internationale:
**WO 2013/164288 (07.11.2013 Gazette 2013/45)**

(54) **DISPOSITIF DE CONVERSION D'ENERGIE THERMIQUE EN ENERGIE MECANIQUE A EFFICACITE AMELIOREE**

VORRICHTUNG ZUR UMWANDLUNG VON WÄRMEENERGIE IN MECHANISCHE ENERGIE MIT VERBESSERTER EFFIZIENZ

DEVICE FOR CONVERTING HEAT ENERGY INTO MECHANICAL ENERGY WITH IMPROVED EFFICIENCY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.05.2012 FR 1254003**

(43) Date de publication de la demande:
**11.03.2015 Bulletin 2015/11**

(73) Titulaire: **Commissariat à l'Énergie Atomique et aux Énergies Alternatives 75015 Paris (FR)**

(72) Inventeurs:
• **SAVELLI, Guillaume**
  **F-38000 Grenoble (FR)**
• **CORONEL, Philippe**
  **F-38530 Barraux (FR)**

(74) Mandataire: **Brevalex**
**95, rue d'Amsterdam**
**75378 Paris Cedex 8 (FR)**

(56) Documents cités:
WO-A1-2005/075605     WO-A2-01/78978
US-A1- 2009 315 335     US-B1- 7 575 807

## Description

## DOMAINE TECHNIQUE ET ART ANTÉRIEUR

La présente invention se rapporte à un dispositif de conversion d'énergie thermique en énergie mécanique à efficacité améliorée, cette énergie mécanique pouvant être convertie en énergie électrique.

Les circuits électroniques, lors de leur fonctionnement, produisent de la chaleur. Cette chaleur n'est pas utilisée et doit être évacuée afin de ne pas détériorer les circuits. D'autres sources de chaleur sont également présentes dans notre environnement, comme par exemple les canalisations, les échappements, les parois de machines industrielles, ..., dont la chaleur dégagée est inutilisée.

Il est envisagé de récupérer cette chaleur par exemple pour la convertir en énergie électrique.

Il est par exemple envisagé d'utiliser des bilames, ceux-ci sont formés de deux lames de métaux, de matériaux ou d'alliages différents à coefficients de dilatation différents, souples, soudées ou collées l'une contre l'autre, dans le sens de la longueur.

Du fait des coefficients de dilatation différents des deux lames, le bilame se déforme avec une grande amplitude à la fois lorsqu'il est échauffé et lorsqu'il est refroidi. Lorsqu'il est échauffé, celui-ci passe d'une forme sensiblement plane à une forme présentant une certaine courbure. L'orientation de la courbure dépend de la température à laquelle il est soumis, et des propriétés initiales du matériau (épaisseur, coefficients de dilatation thermique...). Cette déformation est convertie en énergie électrique par un transducteur, par exemple un matériau piézoélectrique qui est déformé où choqué lorsque le bilame se courbe.

L'énergie transmise au matériau piézoélectrique, et donc l'énergie récupérée ne sont pas optimales.

Il existe également des bilames préformés qui présentent un premier et un deuxième état stable en fonction de la température à laquelle ils sont soumis.

Dans chacun des états stables, ils présentent une courbure ou déformation, les courbures ou déformations des deux états stables étant dans la majorité des cas opposés. Ces bilames sont également désignés " bilames cloquants ". Lorsque de tels bilames sont échauffés et passent d'un premier état stable à un deuxième état stable, on parle de " cloquage ", et lorsque les bilames se refroidissent, et passent du deuxième état stable au premier état stable, on parle de décloquage. Lors du cloquage et du décloquage, une grande quantité d'énergie est libérée.

Chaque bilame comporte une température de cloquage et une température de décloquage. Ainsi lorsque le bilame est disposé entre une source chaude, par exemple, un dispositif électronique, dont la température est supérieure à sa température de cloquage, et une source froide, par exemple l'environnement extérieur, dont la température est inférieure à sa température de cloquage, le bilame est échauffé et passe d'une première position stable à sa deuxième position stable, et lorsqu'il refroidit, passe de sa deuxième position à sa première stable.

Un tel système requiert la présence d'une source chaude et d'une source froide. Or, il peut être difficile de disposer d'un environnement muni de telles sources présentant des températures sensiblement différentes et disposées de manière suffisamment proches pour pouvoir avoir une influence thermique sur le bilame.

Le document US 7 575 807 décrit une structure de matériau déformable hybride comportant une structure de matériau sélectivement déformable sous l'effet de la température et une structure de matériau fournissant un support mécanique pour au moins une partie de la structure de matériau sélectivement déformable.

## EXPOSÉ DE L'INVENTION

C'est par conséquent un but de la présente invention d'offrir un dispositif de conversion d'énergie thermique en énergie mécanique mettant en oeuvre des bilames pouvant fonctionner dans un environnement présentant une température donnée ou deux températures données.

Le but énoncé ci-dessous est atteint par un dispositif comportant au moins deux zones bistables couplées mécaniquement de sorte que le passage d'un état stable à l'autre d'une des zones bistables provoque le passage d'un état stable à l'autre de l'autre zone bistable. Pour cela, les zones bistables présentent des températures de cloquage et décloquage différentes, et celles-ci sont choisies en fonction de la ou des température(s) de l'environnement dans lequel le dispositif est placé.

En d'autres termes, le dispositif comporte une matrice d'au moins deux zones bistables ayant à propriétés thermiques différentes et disposées suffisamment proches l'une de l'autre pour qu'elles soient sous influence mécanique mutuelle, le cloquage d'une zone bistable par effet thermique entraîne le cloquage de la zone bistable voisine par déformation mécanique même si cette dernière n'a pas atteint sa température de cloquage.

Ainsi, le dispositif peut fonctionner suivant les températures de cloquage de différentes zones, en l'absence d'une source chaude et d'une source froide, puisque l'influence mécanique d'un bilame sur l'autre remplace la nécessité de disposer de deux sources de chaleur à température différente. Il peut également fonctionner dans un environnement présentant deux températures, les bilames étant réalisés en fonction de cette ou de ces températures.

Par exemple, dans le cas d'un environnement à un température donnée, chacune des zones bistables présente des températures de cloquage et de décloquage telles que, par rapport à la température de l'environnement dans lequel elles sont disposées, les zones bistables " cloquent " et " décloquent " alternativement soit pas effet thermique, soit par influence mécanique.

La présente invention a alors pour objet un dispositif de conversion d'énergie thermique en énergie mécanique comportant au moins une première et une deuxième zone bistable, aptes à passer d'un premier état stable à un deuxième état stable par effet thermique ou par une action mécanique, lesdites zones bistables étant couplées mécaniquement de sorte que le passage d'un état stable à l'autre de l'une des zones bistables par effet thermique, provoque le passage d'un état stable à l'autre de l'autre zone bistable, chacune des desdites zones bistables présentant un première température à laquelle elle passe du premier état stable au deuxième état stable et une deuxième température à laquelle elle passe du deuxième état stable au premier état stable, la première température étant supérieure à la deuxième température, la première température de la première zone bistable étant supérieure à la première température de la deuxième zone bistable, ledit dispositif étant destiné soit à être disposé dans un environnement ayant une température donnée ou au contact d'une surface à une température donnée, telle que la température donnée est inférieure à la première température est inférieure à la deuxième température de la première zone bistable et est supérieure à la première température de la deuxième zone bistable, soit à être soumis à un première température donnée et une deuxième température donnée telles que la première température donnée est supérieure à la deuxième température donnée et telle que la première température donnée est inférieure à la première température de la première zone bistable et est supérieure à la première température de la deuxième zone bistable et la deuxième température donnée est inférieure à la deuxième température de la première zone bistable.

Les zones bistables sont avantageusement réalisées dans un seul tenant dans un élément bilame.

Dans un exemple de réalisation, les zones bistables sont réalisées dans un élément trilame.

L'élément trilame peut comporter deux faces opposées, des zones bistables étant réalisées dans chacune des faces.

Les zones bistables peuvent être réalisées par pressage.

Avantageusement les zones bistables comportent une dépression centrale et une zone annulaire entourant la dépression centrale, lesdites zones annulaires se chevauchant ou étant en contact par leur contours extérieurs.

Dans un exemple de réalisation avantageux, le dispositif comporte une pluralité de zones bistables disposées les unes à côté des autres de sorte que les zones bistables voisines présentent des premières températures différentes.

Ledit dispositif peut également comporter des parties évidées entre les zones bistables.

La présente invention a également pour objet un ensemble de conversion d'énergie thermique en énergie électrique, comportant au moins un dispositif de conversion selon l'invention et un environnement ou une surface à une température donnée.

Par exemple, la température donnée est inférieure à la première température de la première zone bistable et à la deuxième température de la première zone bistable et est supérieure à la première température de la deuxième zone bistable.

La présente invention a également pour objet un ensemble de conversion d'énergie thermique en énergie électrique, comportant au moins un dispositif de conversion selon l'invention et un environnement présentant un première température donnée et une deuxième température donnée dans lequel la première température donnée est inférieure à la première température de la première zone bistable et est supérieure à la première température de la deuxième zone bistable et la deuxième température donnée est inférieure à la deuxième température de la première zone bistable.

L'ensemble de conversion peut comporter deux dispositifs de conversion.

La présente invention a également pour objet un système de génération d'énergie électrique comportant au moins un dispositif de conversion selon l'invention, et des moyens de conversion de l'énergie mécanique générée par ledit dispositif de conversion en énergie électrique.

Dans un exemple de réalisation, les moyens de conversion de l'énergie mécanique générée par ledit dispositif de conversion en énergie électrique peuvent comporter au moins un élément en matériau piézoélectrique disposé sur le dispositif de conversion de sorte à être déformé par les changements d'état des zones bistables.

En variante, le système de génération peut comporter un empilement de dispositifs de conversion selon l'invention dans lequel les moyens de conversion de l'énergie mécanique générée par ledit empilement de dispositif de conversion en énergie électrique comportent au moins un élément en matériau piézoélectrique disposé sur un dispositif de conversion en énergie électrique situé à une extrémité de l'empilement.

Dans un autre exemple de réalisation, les moyens de conversion de l'énergie mécanique générée par ledit dispositif de conversion en énergie électrique comportent au moins un condensateur à capacité variable, une électrode dudit condensateur à capacité variable étant formée ou portée par le dispositif de conversion en énergie électrique.

**BRÈVE DESCRIPTION DES DESSINS**

La présente invention sera mieux comprise à l'aide de la description qui va suivre et des dessins en annexes sur lesquels :

- les figures 1A à 1D sont des représentations schématiques d'un dispositif de récupération à deux zones bistables selon l'invention dans différents états, disposé dans un environnement à température sensiblement constante,

- les figures 2A à 2D sont des représentations schématiques d'un dispositif de récupération à deux zones bistables selon l'invention dans différents états, dans un environnement présentant deux températures,
- les figures 3A et 3B sont des représentations schématiques de deux exemples de dispositifs de récupération à deux zones bistables selon l'invention,
- les figures 4A et 4B sont des représentations schématiques de deux exemples de dispositifs de génération d'électricité,
- la figure 5 est une vue de dessus d'un dispositif de récupération comportant une matrices de zones bistables selon l'invention,
- la figure 6 est une représentation schématique d'un dispositif de génération d'électricité formé d'un empilement de dispositifs de récupération.

## EXPOSÉ DÉTAILLÉ DE MODES DE RÉALISATION PARTICULIERS

Dans la description qui va suivre, le dispositif qui va être décrit comporte deux zones de déformation, cependant la présente invention se rapporte à des dispositifs comportant n zones aptes à se déformer sous l'effet de la température, n étant un entier positif supérieur ou égal à 2.

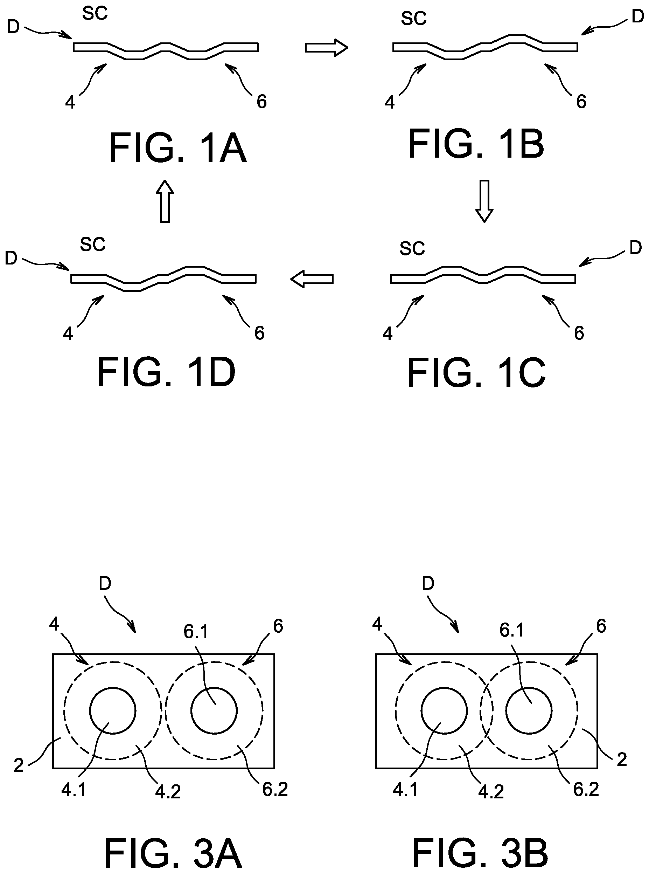

Sur les figures 1A à 1C, on peut voir un exemple schématique d'un dispositif D de conversion selon l'invention dans différents états.

Le dispositif D est formé d'un bilame 2 sous forme de plaque.

Comme cela a été indiqué précédemment, un bilame est formé de deux lames en métal ou alliage différent présentant des coefficients de dilatation différents, les deux lames étant solidarisées par laminage, soudage, collage ou directement par dépôt par exemple par pulvérisation directe d'un deuxième matériau sur un premier matériau comme cela sera décrit en détail dans la suite de la description, de sorte à former un élément monolithique.

La plaque 2 comporte deux zones bistables.

Dans la présente demande, on entend par « zone bistable » une zone apte à prendre deux positions stables, et à passer de l'une à l'autre sous l'effet de la température ou sous l'effet d'une contrainte mécanique.

Dans l'exemple représenté, les zones bistables 4, 6 ont une forme générale de cuvette circulaire. Chacune des positions stables présente une concavité opposée. Chaque dépression passe de l'une à l'autre. Ces zones bistables 4, 6 sont réalisées par exemple par pressage ou emboutissage de la plaque 2.

Chacune des zones bistables 4, 6 présentent ses propres propriétés thermiques, i.e. ses propres températures de cloquage et de décloquage.

La zone bistable 4 a une température de cloquage Tc4 et une température de décloquage Td4, et la zone bistable 6 a une température de cloquage Tc6 et une température de décloquage Td6.

En outre, les zones bistables sont disposées l'une par rapport à l'autre de sorte qu'il y ait un couplage mécanique entre les deux.

Sur les figures 3A et 3B on peut voir deux exemples de dispositions relatives de ces zones bistables. Chaque zone de dépression est formée d'une zone en creux 4.1, 6.1 et d'une zone annulaire extérieure 4.2, 6.2 entourant la zone en creux. Le couplage mécanique entre les deux zones de dépression est obtenu lorsque les deux zones annulaires 4.1, 6.1 sont suffisamment proches ou lorsqu'elles se chevauchent, mais sans que l'une des zones annulaires chevauche une zone en creux. La distance séparant les bords de deux zones annulaires voisines est déterminée en fonction des matériaux, de la flèche des zones de dépression, de la force d'impact, des gammes de température afin d'assurer le couplage mécanique entre les deux zones de dépression. De préférence, dans le cas de zones annulaires de diamètre de l'ordre de quelques centimètres, la distance séparant les bords de deux zones annulaires voisines est inférieure ou égale à 1 cm.

A titre d'exemple, dans le cas d'un exemple de plaques à deux zones bistables : celle-ci peut avoir une longueur de 50 mm et une largeur de 20 mm; les zones bistables ont un diamètre de 6 mm et le diamètre d'une zone bistable et de sa zone annulaire est de 13 mm. Les zones annulaires des deux zones bistables sont en contact bord à bord.

Dans le cas d'une plaque comportant une matrice de dix zones bistables réparties en deux lignes de cinq zones bistables, la plaque a une longueur de 80 mm et une largeur de 35 mm; le diamètre des zones bistables est de 7 mm et le diamètre d'une zone bistable et de sa zone annulaire est de 16 mm. Les zones annulaires sont en contact bord à bord.

En variante, le dispositif pourrait être réalisé par l'assemblage de plusieurs bilames formant chacun une zone bistable. Les matériaux des bilames sont choisis de sorte que les zones bistables ont des températures de cloquage et de décloquage différentes.

Les températures de cloquage et de décloquage de chacune des zones bistables sont choisies en fonction de la température de l'environnement extérieur, la température est désignée TSC.

Les températures de cloquage Tc et de décloquage Td sont telles que :

$$Tc6 < TSC < Tc4,$$

$$Td6 < TSC < Td4,$$

$$Td6 < Tc6 \text{ et } Td4 < Tc4.$$

Les températures de cloquage et décloquage de chacune des zones bistables 4, 6 sont définies lors de la réalisation des zones bistables, plus particulièrement de la zone en creux et de la zone annulaire par le choix de son diamètre et de sa courbure.

A titre d'exemple, pour une plaque ayant une longueur de 35 mm, une largeur de 20 mm et une épaisseur de 200 $\mu$m et comportant des zones bistables dont le diamètre est de 10 mm et le diamètre d'une zone bistable et de sa zone annulaire est de 20 mm, les zones bistables ont des températures de cloquage et décloquage de 120°C et 105 °C respectivement.

Les matériaux pour réaliser le bilame sont également choisis en fonction de la gamme de température dans laquelle le dispositif est destiné à fonctionner.

Par exemple, la plaque bilame peut être réalisée à base d'alliages Fe-Ni de différentes compositions, comme l'INVAR®. Ces alliages peuvent contenir également du chrome et/ou manganèse peuvent être ajoutés. En variante, elle peut être réalisée à partir de Si-Al, SiO2-Al, Si-Au, SiO2-Au, Si-Pb, SiO2-Pb... Les épaisseurs des bilames peuvent varier de quelques nm à quelques mm en fonction de la surface. A titre d'exemple, la plaque peut présenter une épaisseur de 200 $\mu$m.

Nous allons maintenant expliquer le fonctionnement du dispositif dans des environnements présentant différentes conditions de température.

Nous considérons le cas où l'environnement présente une seule température sensiblement constante, qui sera désignée TSC.

A des fins de simplicités de l'explication, nous prendrons des exemples numériques qui ne sont en aucun cas limitatifs.

TSC est égale à 30°C.

Les températures Tc4 et Td4 de la zone bistable 4 sont choisies comme suit :
Tc4 = 50°C et Td4 = 40°C.

Les températures Tc6 et Td6 de la zone bistable 6 sont choisies comme suit :
Tc6= 20°C et Td6 = 10°C.

TSC étant supérieure à Tc6, la zone bistable 6 cloque par effet thermique et passe d'une position stable à l'autre. Le dispositif dans cet état est représenté sur la figure 1B. Du fait du couplage mécanique entre les deux zones bistables 4, 6, la zone bistable 4 cloque également par effet collaboratif mécanique sous l'effet de l'énergie mécanique libérée lors du cloquage de la zone bistable 6. Il est à noter que TSC étant inférieure à Tc4, la zone bistable 4 n'aurait pas cloquée par effet thermique. Le dispositif dans cet état est représenté sur la figure 1C.

Cependant TSC est inférieure à Td4, la zone bistable 4 décloque pour revenir à son état initial. Le dispositif dans cet état est représenté sur la figure 1D.

Par effet collaboratif mécanique, la zone bistable 6 décloque. Il est à noter que TSC étant supérieure à Tc6, la zone bistable 6 n'aurait pas décloqué par effet thermique. Le dispositif dans cet état est représenté sur la figure 1A.

Par conséquent, le dispositif de conversion selon l'invention est capable de changer d'état sans disposer de deux sources de chaleur à des températures différentes et permet de convertir de l'énergie thermique en énergie mécanique.

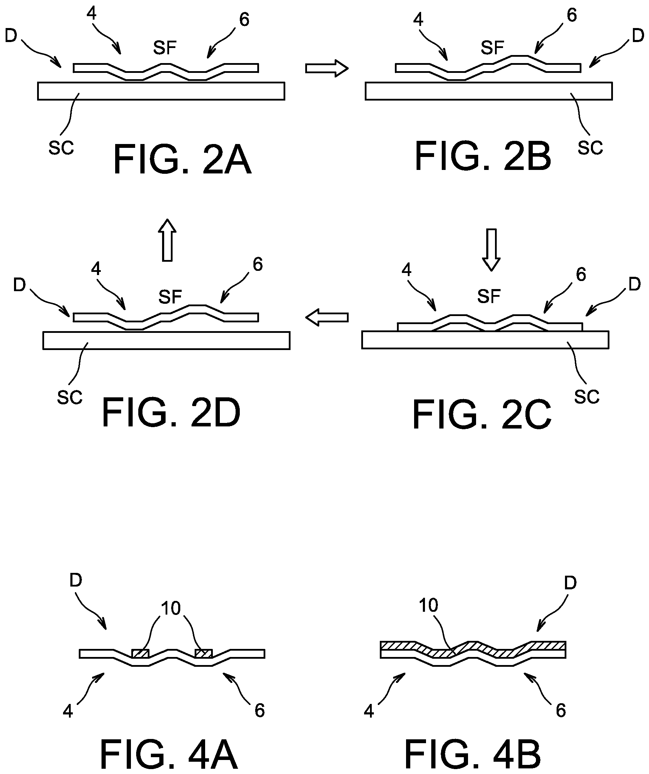

En disposant un matériau piézoélectrique en contact avec les zones bistables 4, 6, il est possible de convertir cette énergie en énergie électrique. Sur les figures 4A et 4B, on peut voir des exemples de réalisation d'un dispositif convertissant l'énergie de déformation du bilame en énergie électrique.

Sur la figure 4A, un matériau piézoélectrique souple 10 recouvre une des faces de la plaque 2. Le matériau 10 est par exemple une membrane de PVDF.

Sur la figure 4B, le matériau piézoélectrique 10 est rigide et est déposé sur la plaque 2. Celui-ci est de petite taille par rapport au dispositif de conversion. Il s'agit par exemple de PZT.

L'épaisseur du matériau piézoélectrique est par exemple inférieure ou égale à celle du bilame. A titre d'exemple, l'épaisseur du bilame et l'épaisseur du PZT sont égales à 200 $\mu$m.

On peut obtenir un dispositif ayant une fréquence d'oscillation très élevée, ce qui permet de solliciter l'élément piézoélectrique à haute fréquence et générer un courant.

En variante, le dispositif peut former une électrode d'un condensateur à capacité variable. Pour cela on choisit des matériaux composant le bilame qui soient conducteurs électriques. L'autre électrode du condensateur peut être formée par une plaque en matériau conducteur fixe disposée en regard du bilame.

L'oscillation du bilame provoque une variation de la distance d'entrefer du condensateur et donc une variation de sa capacité qui peut être convertie en variation de courant ou de tension par injection de charges électriques.

Le dispositif selon l'invention peut être utilisé comme détecteur d'une variation de température celuici se mettant en vibrer quand la température de l'environnement atteint une valeur donnée correspondant aux températures de cloquage et de décloquage.

De manière très avantageuse, on peut fixer sur le dispositif une feuille flexible, par exemple en matériau plastique, qui va suivre les oscillations du dispositif et de se déformer de manière correspondante.

La feuille flexible présente une surface supérieure à celle du dispositif, cependant les déformations du dispositif sont transmises à toute la surface de la feuille, même aux zones qui ne sont pas en contact avec le dispositif. La feuille est recouverte d'un matériau piézoélectrique souple. Ainsi la surface de matériau piézoélectrique et supérieure à celle du dispositif, ce qui permet d'augmenter la quantité d'électricité produite.

Nous allons maintenant décrire un exemple de dispositif ayant un mode de fonctionnement dans lequel le dispositif est en contact avec une surface à une température donnée TSC et est disposé dans un environnement à une température inférieure à la température donnée, qui n'intervient pas ou peu dans l'actionnement du dispositif de conversion. La surface sera également désignée SC come l'environnement des figures 1A à 1D et sa température TSC.

Dans cet exemple, les zones bistables ont les propriétés thermiques suivantes :

$$Tc6 < TSC < Tc4 \text{ et } TSC < Td4.$$

Sur les figures 2A à 2D sont représentés les différents états d'un dispositif selon l'invention en contact avec une surface SC et disposée dans un environnement SF.

A titre d'exemple, la température de la surface SC est égale à 150°C et une température pour l'environnement extérieur SF est égale à 30°C.

Par exemple, on choisit :

Tc4 = 180°C et Td4 = 160°C ;
Tc6 = 120°C et Td6 = 100°C.

La température de la surface SC étant supérieure à Tc6, la zone bistable 6 cloque par effet thermique et passe d'une position stable à l'autre. Le dispositif dans cet état est représenté sur la figure 2B. Par effet collaboratif mécanique la zone bistable 4 cloque également sous l'effet de l'énergie mécanique libérée lors du cloquage de la zone bistable 6, comme on peut le voir sur la figure 2C. Il est à noter que la température de la surface SC est inférieure à Tc4, la zone bistable 4 n'aurait pas cloquée par effet thermique.

La température de la surface SC étant inférieure à Td4, la zone bistable 4 décloque pour revenir à son état initial, comme on peut le voir sur la figure 2D, ce qui a pour effet d'entrainer mécaniquement la zone bistable 6. Le dispositif se retrouve dans l'état de la figure 2A.

Les étapes décrites ci-dessus se répètent tant que la température de la surface SC est supérieure à Tc6 et est inférieure à Td4.

Ainsi le dispositif fonctionne indépendamment de la température de l'environnement.

Inversement le dispositif peut être disposé dans un environnement à une température donnée et être en contact avec une surface à une température inférieure à celle de l'environnement. La température de la surface n'intervient pas ou peu dans l'actionnement du dispositif.

Nous allons maintenant décrire un exemple de réalisation d'un dispositif dans lequel la mise en oscillation est contrôlée par la température d'une surface à une température donnée TSC et par la température de l'environnement extérieur TSF qui est inférieure à la température donnée TSC.

Dans cet exemple, les zones bistables ont les propriétés thermiques suivantes :

$$Tc6 < TSC < Tc4$$

$$TSF < Td4$$

A titre d'exemple, TSC est égale à 50°C et TSF est égale à 30°C.

Par exemple, on choisit :

Tc4 = 60°C et Td4 = 40°C ;
Tc6 = 40°C et Td6 = 20°C.

La température TSC étant supérieure à Tc6, la zone bistable 6 cloque par effet thermique et passe d'une position stable à l'autre. Par effet collaboratif mécanique la zone bistable 4 cloque également sous l'effet de l'énergie mécanique libérée lors du cloquage de la zone bistable 6. Il est à noter que la température TSC est inférieure à Tc4, la zone bistable 4 n'aurait pas cloquée par effet thermique.

La température de l'environnement est inférieure à Td4, la zone bistable 4 décloque pour revenir à son état initial.

Par effet collaboratif mécanique, la zone bistable 6 décloque. Il est à noter que la température de l'environnement extérieur étant supérieure à Tc6, la zone bistable 6 n'aurait pas cloquée par effet thermique. Le dispositif dans cet état est représenté sur la figure 2A.

Les étapes décrites ci-dessus se répètent tant que la température TSC est supérieure à TC6 et la température de l'environnement extérieur est inférieure à Td4.

Ainsi le dispositif selon l'invention peut fonctionner lorsqu'il est soumis à une seule température donnée. Il peut également fonctionner lorsqu'il voit deux températures. Ses domaines d'utilisation sont donc très vastes.

Par exemple la différence entre Tc4 et Tc6 peut être très faible par exemple 1°C, mais celle-ci va dépendre de la précision de la température donné TSC puisque Tc6 < TSC < Tc2.

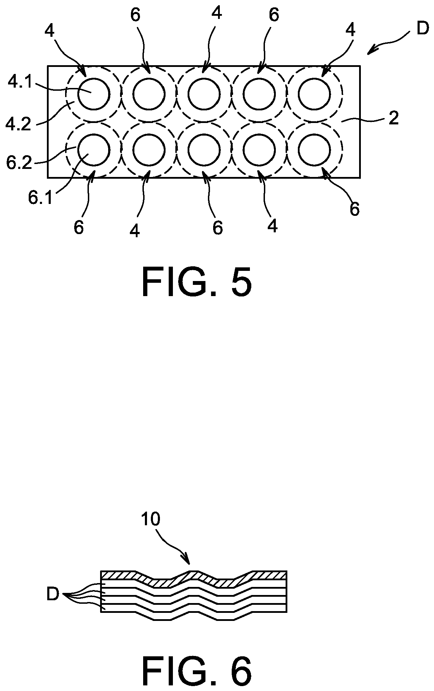

Sur la figure 5, on peut voir un dispositif de conversion comportant une matrice de dix zones bistables. Les zones bistables voisines ont des températures de cloquage et décloquage différentes.

Dans l'exemple représenté, les zones annulaires 4.2 et 6.2 de deux zones bistables voisines sont en contact.

Dans l'exemple de la figure 5, les zones bistables 4 et 6 sont alternées de sorte à créer l'effet collaboratif.

Toutes les zones bistables peuvent avoir des températures de cloquage et de décloquage de sorte qu'elles changent d'état pour une gamme de température réduite.

Alternativement, les zones bistables peuvent avoir des températures de cloquage et de décloquage suffisamment différentes de manière à couvrir une large plage de température, permettant ainsi au dispositif d'osciller sur une large gamme de température pour la température donnée TSC.

On peut envisager des groupes de zones bistables ayant les mêmes températures de cloquage et de décloquage, les zones bistables de chaque groupe étant réparties dans le bilame de sorte à être voisine avec une zone bistable d'un autre groupe pour assurer le fonctionnement collaboratif.

Dans ces conditions, à une température donnée TSC1, des premières zones bistables cloquent par effet thermique, ce qui entraîne le cloquage de deuxièmes zones bistables voisines par effet mécanique.

Ces deuxièmes zones bistables décloquent car elles sont dans leur plage de température de décloquage par effet thermique, entraînant le décloquage des premières zones bistables par effet mécanique.

A une autre température TSC2, c'est un autre groupe de zones bistables qui cloque, entraînant le cloquage des autres zones bistables par effet mécanique.

Ainsi, sur une large gamme de température, le dispositif dispose toujours d'un groupe de zones bistables actif thermiquement, et qui entraîne mécaniquement les autres zones bistables.

La source de chaleur dans le cas des exemples des figures 2A à 2D peut être variable, dans le temps et dans l'espace. Par exemple dans ce dernier cas, on peut envisager que le dispositif de conversion soit en contact avec une surface connaissant un gradient de température d'une extrémité à l'autre de la surface.

Différentes zones bistables peuvent donc cloquer ou décloquer simultanément par effet thermique, et entrainer par effet collaboratif des zones bistables voisines.

Dans un autre exemple de réalisation, le dispositif de conversion peut comporter au moins deux zones bistables 4, 6 telles que :

$$Tc4>Tc6$$

et

$$Td6>Td4.$$

Ainsi, lorsque la zone bistable 6 cloque par effet thermique, elle entraîne la zone bistable 4 par effet collaboratif, puis à nouveau la zone bistable 6 décloque par effet thermique, entrainant la zone bistable 4.

De manière alternative, on peut utiliser une structure trilame à la place d'une structure bilame. Un trilame est un élément comportant trois couches de matériaux, deux couches d'extrémité et une couche centrale, la couche centrale ayant un coefficient de dilation différent du ou des matériaux des couches d'extrémité. Par exemple les couches extérieures sont dans un même matériau.

En utilisant un trilame dont les couches d'extrémité sont dans le même matériau, il est possible de réaliser des zones bistables sur les deux faces de la plaque ces zones bistables ayant les mêmes propriétés thermique car elles ont "la même composition de couches et le même ordonnancement de couches". En outre, les zones bistables peuvent être plus rapprochées.

Dans les exemples décrits comme celui de la figure 5, le dispositif est sous forme d'une plaque plane. On peut envisager un dispositif non plan, par exemple avec une ou plusieurs courbures et/ou une ou plusieurs parties planes pour qu'il suive le contour d'une surface non plane et soit en contact avec celle-ci.

Dans l'exemple de la figure 5, le dispositif s'étend dans un plan. Des dispositifs s'étendant dans les trois dimensions sont envisageables.

De manière très avantageuse, l'empilement de dispositifs tel que celui des figures 1A à 1B permet d'amplifier l'énergie libérée lors du cloquage des zones bistables. Un tel dispositif est représenté sur la figure 6. Un matériau piézoélectrique 10 recouvre une extrémité de l'empilement. Celui-ci voit alors une grande énergie libérée lors du cloquage ou décloquage, ce qui augmente la quantité d'électricité générée par le matériau piézoélectrique.

On peut également envisager de coupler plusieurs dispositifs selon l'invention. On peut par exemple envisager un dispositif dans lequel des dispositifs tels que celui de la figure 4 seraient disposée de part et d'autre d'un même objet à la température donne TSC. Le dispositif serait alors symétrique par rapport à cet objet. On peut associer plusieurs dispositifs oscillant à des températures différentes pour relancer ou entretenir les oscillations.

Les bilames ou trilames peuvent avoir une autre forme qu'un rectangle, et peuvent présenter des épaisseurs non constantes.

En outre, de manière très avantageuse, le dispositif peut être évidé dans des zones ne comportant pas des zones bistables de sorte à réduire la quantité de matière bilame et à réduire le temps nécessaire à la thermalisation des zones bistables et donc à leur changement d'état. Ces évidements peuvent être situés au niveau des extrémités de la plaque de la figure 5.

Dans les exemples de fonctionnement, le cloquage ou décloquage d'une zone bistable entraîne le cloquage ou décloquage d'une zone voisine par couplage mécanique. Dans le cas d'un dispositif comportant plusieurs zones bistables on peut envisager qu'une zone bistable changeant d'état par effet collaboratif entraîne à son tour le changement d'état d'une zone bistable voisine, ou qu'une zone bistable changeant d'état par effet thermique provoque à son tour le changement d'état d'une zone bistable voisine.

Le dispositif de conversion selon l'invention peut être associé à un dispositif électronique pour convertir la chaleur produite par les composants électroniques en électricité qui pourrait être consommé par le dispositif électronique lui-même par exemple. Il peut être appliqué dans des véhicules automobiles au niveau du moteur thermique ou une batterie électrique ou dans toute autre installation produisant de la chaleur qui peut être convertie.

**Revendications**

1. Dispositif de conversion d'énergie thermique en énergie mécanique comportant au moins une première zone bistable (4) et une deuxième (6) zone, la première zone bistable étant apte à passer d'un premier état stable à un deuxième état stable par effet thermique ou par une action mécanique, ladite première zone bistable (4) présentant un première température (Tc4) à laquelle elle passe du premier état stable au deuxième état stable et une deuxième température (Td4) à laquelle elle passe du deuxième état stable au premier état stable, la première température (Tc4) étant supérieure à la deuxième température (Td4), **caractérisé en ce que** la deuxième zone (6) est une deuxième zone bistable présentant une première température (Tc6) à laquelle elle passe du premier état stable au deuxième état stable, et une deuxième température (Td6) à laquelle elle passe du deuxième état stable au premier état stable, la première température (Tc6) étant supérieure à la deuxième température (Td6), **en ce que** lesdites zones bistables (4, 6) sont couplées mécaniquement de sorte que le passage d'un état stable à l'autre de l'une des zones bistables (4, 6) par effet thermique, provoque le passage d'un état stable à l'autre de l'autre zone bistable (6, 4) par effet collaboratif mécanique, et **en ce que** la première température (Tc4) de la première zone bistable (4) est supérieure à la première température (Tc6) de la deuxième zone bistable (6).

2. Dispositif de conversion selon la revendication 1, dans lequel les zones bistables (4, 6) sont réalisées dans un seul tenant dans un élément bilame.

3. Dispositif de conversion selon la revendication 1, dans lequel les zones bistables (4, 6) sont réalisées dans un élément trilame.

4. Dispositif de conversion selon la revendication 3, dans lequel l'élément réalisé comporte deux faces opposées, des zones bistables étant réalisées dans chacune des faces.

5. Dispositif de conversion selon l'une des revendications 1 à 4, dans lequel les zones bistables (4, 6) sont réalisées par pressage.

6. Dispositif de conversion selon l'une des revendications 1 à 5, dans lequel les zones bistables (4, 6) comportent une dépression centrale (4.1, 6.1) et une zone annulaire (4.2, 6.2) entourant la dépression centrale (4.1, 6.1), lesdites zones annulaires (4.2, 6.2) se chevauchant ou étant en contact par leur contours extérieurs.

7. Dispositif de conversion selon l'une des revendications 1 à 6, comportant une pluralité de zones bistables (4, 6) disposées les unes à côté des autres de sorte que les zones bistables (4, 6) voisines présentent des premières températures différentes.

8. Dispositif de conversion selon l'une des revendications 1 à 7, dans lequel ledit dispositif comporte des parties évidées entre les zones bistables (4, 6).

9. Ensemble de conversion d'énergie thermique en énergie électrique, comportant au moins un dispositif de conversion selon l'une des revendications 1 à 8 et un environnement ou une surface à une température donnée ou un environnement présentant une première et une deuxième température donnée.

10. Ensemble de conversion selon la revendication 9, dans lequel la température donnée est inférieure à la première température (Tc4) de la première zone bistable (4) et à la deuxième température (Td4) de la première zone bistable (4) et est supérieure à la première température (Tc6) de la deuxième zone bistable (6).

11. Ensemble de conversion selon la revendication 9, dans lequel la première température donnée (TSC) est supérieure à la deuxième température donnée (TSF) et dans lequel la première température donnée (TSC) est inférieure à la première température (Tc4) de la première zone bistable (4) et est supérieure à la première température (Tc6) de la deuxième zone bistable (6) et la deuxième température donnée (TSF) est inférieure à la deuxième température (Td4) de la première zone bistable (4).

12. Ensemble de conversion selon la revendication 9, 10 ou 11 comportant deux dispositifs de conversion.

13. Système de génération d'énergie électrique comportant au moins un dispositif de conversion selon l'une des revendications 1 à 8, et des moyens de conversion de l'énergie mécanique générée par ledit dispositif de conversion en énergie électrique

14. Système de génération d'énergie électrique selon la revendication 13, dans lequel les moyens de conversion de l'énergie mécanique générée par ledit dispositif de conversion en énergie électrique comportent au moins un élément en matériau piézoélectrique (10) disposé sur le dispositif de conversion de sorte à être déformé par les changements d'état des zones bistables.

15. Système de génération d'énergie électrique selon la revendication 13, comportant un empilement de dispositifs de conversion selon l'une des revendications 1 à 8, dans lequel les moyens de conversion de l'énergie mécanique générée par ledit empilement de dispositif de conversion en énergie électrique comportent au moins un élément en matériau piézoélectrique (10) disposé sur un dispositif de conversion en énergie électrique situé à une extrémité de l'empilement.

16. Système de génération d'énergie électrique selon la revendication 13, dans lequel les moyens de conversion de l'énergie mécanique générée par ledit dispositif de conversion en énergie électrique comportent au moins un condensateur à capacité variable, une électrode dudit condensateur à capacité variable étant formée ou portée par le dispositif de conversion en énergie électrique.

17. Utilisation d'un dispositif de conversion selon l'une des revendications 1 à 8 ou d'un système de génération selon l'une des revendications 13 à 16, dans lequel ledit dispositif est disposé dans un environnement à une température donnée (TSC) ou au contact d'une surface à une température donnée (TSC), telle que la température donnée (TSC) est inférieure à la première température (Tc4) et est inférieure à la deuxième température (Td4) de la première zone bistable et est supérieure à la première température (Tc6) de la deuxième zone bistable (6).

18. Utilisation d'un dispositif de conversion selon l'une des revendications 1 à 8 ou d'un système de génération selon l'une des revendications 13 à 16, dans lequel ledit dispositif est soumis à une première température donnée (TSC) et une deuxième température donnée (TSF) telles que la première température donnée (TSC) est supérieure à la deuxième température donnée (TSF) et telle que la première température donnée (TSC) est inférieure à la première température (Tc4) de la première zone bistable (4) et est supérieure à la première température (Tc6) de la deuxième zone bistable (6) et la deuxième température donnée (TSF) est inférieure à la deuxième température (Td4) de la première zone bistable (4).

**Patentansprüche**

1. Vorrichtung zum Umwandeln von Wärmeenergie in mechanische Energie umfassend wenigstens einen ersten bistabilen Bereich (4) und einen zweiten Bereich (6), wobei der erste bistabile Bereich durch thermische Wirkung oder eine mechanische Einwirkung von einem ersten stabilen Zustand in einen zweiten stabilen Zustand wechseln kann, wobei der erste bistabile Bereich (4) eine erste Temperatur (Tc4), bei der er vom ersten stabilen Zustand zum zweiten stabilen Zustand wechselt, und eine zweite Temperatur (Td4), bei der er vom zweiten stabilen Zustand zum ersten stabilen Zustand wechselt, aufweist, wobei die erste Temperatur (Tc4) höher ist als die zweite Temperatur (Td4), **dadurch gekennzeichnet, dass** der zweite Bereich (6) ein zweiter bistabiler Bereich ist, der eine erste Temperatur (Tc6), bei der er vom ersten stabilen Zustand zum zweiten stabilen Zustand wechselt, und eine zweite Temperatur (Td6), bei der er vom zweiten stabilen Zustand zum ersten stabilen Zustand wechselt, aufweist, wobei die erste Temperatur (Tc6) höher ist als die zweite Temperatur (Td6), dass die bistabilen Bereiche (4, 6) mechanisch so gekoppelt sind, dass der Wechsel von einem der bistabilen Bereiche (4, 6) von einem stabilen Zustand zum anderen durch thermische Wirkung den Wechsel des anderen bistabilen Bereichs (6, 4) von einem stabilen Zustand zum anderen durch mechanische Mitwirkung bewirkt, und dass die erste Temperatur (Tc4) des ersten bistabilen Bereichs (4) höher ist als die erste Temperatur (Tc6) des zweiten bistabilen Bereichs (6).

2. Umwandlungsvorrichtung nach Anspruch 1, wobei die bistabilen Bereiche (4, 6) in einem Stück aus einem Bimetallelement bestehen.

3. Umwandlungsvorrichtung nach Anspruch 1, wobei die bistabilen Bereiche (4, 6) aus einem Trimetallelement bestehen.

4. Umwandlungsvorrichtung nach Anspruch 3, wobei das hergestellte Element zwei gegenüberliegende Seiten umfasst, wobei bistabile Bereiche an jeder der Seiten ausgebildet sind.

5. Umwandlungsvorrichtung nach einem der Ansprüche 1 bis 4, wobei die bistabilen Bereiche (4, 6) durch Pressen hergestellt werden.

6. Umwandlungsvorrichtung nach einem der Ansprüche 1 bis 5, wobei die bistabilen Bereiche (4, 6) eine mittige Vertiefung (4.1, 6.1) und einen die mittige Vertiefung (4.1, 6.1) umgebenden ringförmigen Bereich (4.2, 6.2) umfassen, wobei die ringförmigen Bereiche (4.2, 6.2) überlappen oder sich an ihren äußeren Rändern berühren.

7. Umwandlungsvorrichtung nach einem der Ansprüche 1 bis 6, umfassend eine Vielzahl von nebeneinander angeordneten bistabilen Bereichen (4, 6), so dass die benachbarten bistabilen Bereiche (4, 6) verschiedene erste Temperaturen aufweisen.

**8.** Umwandlungsvorrichtung nach einem der Ansprüche 1 bis 7, wobei die Vorrichtung hohle Teile zwischen den bistabilen Bereichen (4, 6) umfasst.

**9.** Einheit zum Umwandeln von Wärmeenergie in elektrische Energie, umfassend wenigstens eine Umwandlungsvorrichtung nach einem der Ansprüche 1 bis 8 und eine Umgebung oder eine Fläche mit einer vorgegebenen Temperatur oder eine Umgebung, die eine erste und eine zweite vorgegebene Temperatur aufweist.

**10.** Umwandlungseinheit nach Anspruch 9, wobei die vorgegebene Temperatur niedriger ist als die erste Temperatur (Tc4) des ersten bistabilen Bereichs (4) und die zweite Temperatur (Td4) des ersten bistabilen Bereichs (4) höher ist als die erste Temperatur (Tc6) des zweiten bistabilen Bereichs (6).

**11.** Umwandlungseinheit nach Anspruch 9, wobei die erste vorgegebene Temperatur (TSC) höher ist als die zweite vorgegebene Temperatur (TSF) und wobei die erste vorgegebene Temperatur (TSC) niedriger ist als die erste Temperatur (Tc4) des ersten bistabilen Bereichs (4) und höher ist als die erste Temperatur (Tc6) des zweiten bistabilen Bereichs (6) und die zweite vorgegebene Temperatur (TSF) niedriger ist als die zweite Temperatur (Td4) des ersten bistabilen Bereichs (4).

**12.** Umwandlungseinheit nach Anspruch 9, 10 oder 11 umfassend zwei Umwandlungsvorrichtungen.

**13.** System zum Erzeugen von elektrischer Energie umfassend wenigstens eine Umwandlungsvorrichtung nach einem der Ansprüche 1 bis 8 und Mittel zum Umwandeln der von der Umwandlungsvorrichtung erzeugten mechanischen Energie in elektrische Energie.

**14.** System zum Erzeugen von elektrischer Energie nach Anspruch 13, wobei die Mittel zum Umwandeln der von der Umwandlungsvorrichtung erzeugten mechanischen Energie in elektrische Energie wenigstens ein auf der Umwandlungsvorrichtung angeordnetes Element aus piezoelektrischem Material (10) umfassen, so dass eine Verformung durch die Zustandsänderungen der bistabilen Bereiche erfolgt.

**15.** System zum Erzeugen von elektrischer Energie nach Anspruch 13, umfassend einen Stapel von Umwandlungsvorrichtungen nach einem der Ansprüche 1 bis 8, wobei die Mittel zum Umwandeln der vom Stapel von Umwandlungsvorrichtungen erzeugten mechanischen Energie in elektrische Energie wenigstens ein auf einer Vorrichtung zur Umwandlung in elektrische Energie angeordnetes Element aus piezoelektrischem Material (10) an einem Ende des Stapels umfassen.

**16.** System zum Erzeugen von elektrischer Energie nach Anspruch 13, wobei die Mittel zum Umwandeln der von der Umwandlungsvorrichtung erzeugten mechanischen Energie in elektrische Energie wenigstens einen Kondensator mit variabler Kapazität umfassen, wobei eine Elektrode des Kondensators mit variabler Kapazität von der Vorrichtung zum Umwandeln in elektrische Energie gebildet oder von dieser getragen wird.

**17.** Nutzung einer Umwandlungsvorrichtung nach einem der Ansprüche 1 bis 8 oder eines Erzeugungssystems nach einem der Ansprüche 13 bis 16, wobei die Vorrichtung in einer Umgebung mit einer vorgegebenen Temperatur (TSC) oder in Kontakt mit einer Fläche mit einer vorgegebenen Temperatur (TSC) angeordnet ist, so dass die vorgegebene Temperatur (TSC) niedriger ist als die erste Temperatur (Tc4) und niedriger ist als die zweite Temperatur (Td4) des ersten bistabilen Bereichs und höher ist als die erste Temperatur (Tc6) des zweiten bistabilen Bereichs (6).

**18.** Nutzung einer Umwandlungsvorrichtung nach einem der Ansprüche 1 bis 8 oder eines Erzeugungssystems nach einem der Ansprüche 13 bis 16, wobei die Vorrichtung einer ersten vorgegebenen Temperatur (TSC) und einer zweiten vorgegebenen Temperatur (TSF) ausgesetzt ist, so dass die erste vorgegebene Temperatur (TSC) höher ist als die zweite vorgegebene Temperatur (TSF) und so dass die erste vorgegebene Temperatur (TSC) niedriger ist als die erste Temperatur (Tc4) des ersten bistabilen Bereichs (4) und höher ist als die erste Temperatur (Tc6) des zweiten bistabilen Bereichs (6) und die zweite vorgegebene Temperatur (TSF) niedriger ist als die zweite Temperatur (Td4) des ersten bistabilen Bereichs (4).

**Claims**

**1.** Device for converting heat energy into mechanical energy comprising at least one first (4) and one second (6) bistable area, able to pass from a first stable state to a second stable state by means of a thermal effect or mechanical action, said first bistable area (4) having a first temperature (TC4) at which it passes from the first stable state to the second stable state and a second temperature (Td4) at which it passes from the second stable state to the first stable state, the first temperature (Tc4) being higher than the second temperature (Td4), **characterized in**

**that** the second area (6) is a bistable area (6) having a first temperature (Tc6) at which it passes from the first stable state to the second stable state and a second temperature (Td6) at which it passes from the second stable state to the first stable state, the first temperature (Tc6) being higher than the second temperature (Td6),**in that** said bistable areas (4, 6) being mechanically coupled such that the passage from one stable state to the other of one of the bistable areas (4, 6) by means of a thermal effect causes the passage from one stable state to the other of the other bistable area (6, 4) by mechanical collaborative effect, and **in that** the first temperature (Tc4) of the first bistable area (4) is higher than the first temperature (Tc6) of the second bistable area (6).

2. Conversion device according to claim 1, in which the bistable areas (4, 6) are made in one piece of a bimetallic strip element.

3. Conversion device according to claim 1, in which the bistable areas (4, 6) are made of a trimetallic strip element.

4. Conversion device according to claim 3, in which the element formed comprises two opposing faces, bistable areas being formed in each of the faces.

5. Conversion device according to one of claims 1 to 4, in which the bistable areas (4, 6) are formed by pressing.

6. Conversion device according to one of claims 1 to 5, in which the bistable areas (4, 6) comprise a central depression (4.1, 6.1) and an annular area (4.2, 6.2) surrounding the central depression (4.1, 6.1), said annular areas (4.2, 6.2) overlapping or being in contact via their external contours.

7. Conversion device according to one of claims 1 to 6, comprising a plurality of bistable areas (4, 6) arranged alongside each other such that neighbouring bistable areas (4, 6) have different first temperatures.

8. Conversion device according to one of claims 1 to 7, in which said device comprises hollowed out portions between the bistable areas (4, 6).

9. Assembly for converting heat energy into electrical energy, comprising at least one conversion device according to one of claims 1 to 8 and an environment or a surface at a given temperature or an environment having a first and a second given temperature.

10. Conversion assembly according to claim 9, in which the given temperature is lower than the first temperature (Tc4) of the first bistable area (4) and the second temperature (Td4) of the first bistable area (4) and is higher than the first temperature (Tc6) of the second bistable area (6).

11. Conversion assembly according to claim 9, in which the first given temperature (TSC) is higher than the second given temperature (TSF) and in which the first given temperature (TSC) is lower than the first temperature (Tc4) of the first bistable area (4) and is higher than the first temperature (Tc6) of the second bistable area (6) and the second given temperature (TSF) is lower than the second temperature (Td4) of the first bistable area (4).

12. Conversion assembly according to claim 9, 10 or 11 comprising two conversion devices.

13. System for generating electrical energy comprising at least one conversion device according to one of claims 1 to 8, and means for converting the mechanical energy generated by said conversion device into electrical energy.

14. System for generating electrical energy according to claim 13, in which the means for converting the mechanical energy generated by said conversion device into electrical energy comprise at least one element made of piezoelectric material (10) arranged on the conversion device so as to be deformed by the changes of state of the bistable areas.

15. System for generating electrical energy according to claim 13, comprising a stack of conversion devices according to one of claims 1 to 8, in which the means for converting the mechanical energy generated by said stack of conversion devices into electrical energy comprise at least one element made of piezoelectric material (10) arranged on an electrical energy conversion device situated at one end of the stack.

16. System for generating electrical energy according to claim 13, in which the means for converting the mechanical energy generated by said electrical energy conversion device comprise at least one variable capacity capacitor, an electrode of said variable capacity capacitor being formed or borne by the electrical energy conversion device.

17. Use of a conversion device according to one of claims 1 to 8 or of a generating system according to one of claims 13 to 16, in which said device is arranged in an environment at a given temperature (TSC) or in contact with a surface at a given temperature (TSC), such that the given temperature (TSC) is lower than the first temperature (Tc4) and is lower than the second temperature (Td4) of the first bistable area and is higher than the first temperature (Tc6) of the second bistable area (6).

18. Use of a conversion device according to one of claims 1 to 8 or of a generating system according to one of claims 13 to 16, in which said device is subjected to a first given temperature (TSC) and a second given temperature (TSF) such that the first given temperature (TSC) is higher than the second given temperature (TSF) and such that the first given temperature (TSC) is lower than the first temperature (Tc4) of the first bistable area (4) and is higher than the first temperature (Tc6) of the second bistable area (6) and the second given temperature (TSF) is lower than the second temperature (Td4) of the first bistable area (4).

FIG. 1A

FIG. 1B

FIG. 1D

FIG. 1C

FIG. 3A

FIG. 3B

FIG. 2A

FIG. 2B

FIG. 2D

FIG. 2C

FIG. 4A

FIG. 4B

## FIG. 5

## FIG. 6

**RÉFÉRENCES CITÉES DANS LA DESCRIPTION**

**Documents brevets cités dans la description**

- US 7575807 B